# FASCICULE DE BREVET EUROPEEN

(11) **EP 3 580 404 B1**
(45) Date de publication et mention de la délivrance du brevet: **28.04.2021**
(21) Numéro de dépôt: 18707261.6
(22) Date de dépôt: 08.02.2018
(51) Int. Cl.: E04F 13/00, E04F 13/08, E04B 9/04, E04B 9/30, F16B 5/06

(54) **PROCEDE DE MONTAGE D'UN REVETEMENT SOUPLE TENDU SUR UN CADRE DE FIXATION ET CADRE DE FIXATION POUR LA MISE EN OEUVRE DUDIT PROCEDE**
VERFAHREN ZUM MONTIEREN EINER GESTRECKTEN FLEXIBLEN ABDECKUNG AUF EINEM MONTAGERAHMEN UND MONTAGERAHMEN ZUR DURCHFÜHRUNG DES VERFAHRENS
METHOD FOR MOUNTING A STRETCHED FLEXIBLE COVERING ON A MOUNTING FRAME AND MOUNTING FRAME FOR IMPLEMENTING SAID METHOD

(30) Priorité: 13.02.2017 FR 1751143; 13.09.2017 FR 1758476
(43) Date de publication de la demande: 18.12.2019
(73) Titulaire: Clipso Productions, 68800 Vieux-Thann (FR)
(72) Inventeur: GEIS, Bernard, 1022 Chavannes Pres Renens (CH)
(74) Mandataire: Fidal Innovation
(86) Numéro de dépôt international: PCT/EP2018/053154
(87) Numéro de publication internationale: WO 2018/146186

(56) Documents cités:
- EP-A1- 2 597 217
- WO-A1-2013/111991
- KR-U- 20100 000 586
- US-A1- 2005 139 334

## Description

### Domaine technique :

La présente invention concerne un procédé de montage d'un revêtement souple tendu sur un cadre de fixation, ledit revêtement ayant des dimensions supérieures aux dimensions dudit cadre, ledit cadre de fixation comportant au moins un assemblage de profilés de base, chaque profilé de base comportant un logement de réception d'un bord dudit revêtement et des moyens de pincement agencés pour retenir ledit bord du revêtement dans ledit logement de réception, procédé dans lequel le bord du revêtement est introduit dans ledit logement de réception au moyen d'un outil d'insertion et y est maintenu sous tension par lesdits moyens de pincement.

L'invention concerne également un cadre de fixation pour la mise en œuvre dudit procédé de montage, comportant au moins un assemblage de profilés de base, chaque profilé de base comportant un logement de réception d'un bord dudit revêtement et des moyens de pincement agencés pour retenir ledit bord du revêtement dans ledit logement de réception.

### Technique antérieure :

Les revêtements souples sont largement répandus pour couvrir des parois murales, constituer des faux -plafonds, créer des caissons d'ambiance par exemple lumineux, des dalles de faux plafond, ou similaires. On entend par « revêtement souple » des toiles tissées enduites ou non, des toiles non tissées enduites ou non, des films en matière synthétique thermo-étirables ou thermo-rétractables, etc. Il est également connu d'utiliser des profilés sous différentes formes pour faciliter leur pose et la littérature en matière de brevets est riche. On peut citer à titre d'exemple les publications EP 2 597 217 A1 et US 2017/0198480 A1, qui proposent d'équiper le bord périphérique du revêtement souple d'un profilé d'accrochage en forme d'hameçon qui vient s'emboiter et s'auto-verrouiller à l'intérieur d'un profilé de fixation, à l'arrière d'un crochet. Cette technique de fixation est toutefois limitée aux seuls films ou membranes PVC qui permettent de recevoir l'hameçon fixé par thermo- soudure haute fréquence. En effet, l'hameçon qui est constitué d'un profilé en matière thermoplastique doit être thermo-soudé au revêtement souple en PVC en continu sur toute sa périphérie avant la pose et en usine par une thermo- soudeuse. Le profilé en forme d'hameçon fait ainsi partie intégrante et définitive du revêtement souple. Dans cette technique de pose, le revêtement souple doit être de dimensions légèrement inférieures aux dimensions du cadre pour pouvoir coopérer précisément avec ledit cadre en chauffant ledit revêtement souple à l'aide d'un canon à chaleur pour en augmenter ses dimensions. Après la pose, le revêtement en se refroidissant se rétracte et se tend automatiquement sur ledit cadre. Les contraintes de fabrication du revêtement équipé de son profilé d'accrochage sont grandes, compte tenu de la précision nécessaire de ses dimensions qui doivent être adaptées à celles du cadre sur lequel il est fixé. On parle dans ce cas d'une fabrication sur mesure.

US 2005/139334A1 décrit un élément allongé pour le cadre d'un système de panneau comprenant un matériau sous la forme d'une feuille souple.

On peut encore citer à titre d'exemple les publications suivantes US 4,986,332, WO 99/31330, FR 2 823 779 et FR 2 928 674, qui proposent des profilés de fixation dans lesquels les bords du revêtement souple sont maintenus soit par pincement entre deux lèvres souples ou deux mâchoires crantées appartenant audit profilé, soit par blocage au moyen de joncs cylindriques rapportés dans des gorges circulaires dudit profilé. Dans cette technique de pose, le revêtement souple doit être de dimensions supérieures aux dimensions du cadre pour pouvoir coopérer précisément avec ledit cadre, puis être coupé à fleur après la pose. La publication KR 2010 0000586 U propose un autre profilé de fixation pourvu d'un logement de réception en forme de U, pourvu de lèvres souples s'étendant transversalement à partir d'une de ses faces intérieures, et dont les extrémités coopèrent avec des crans sapin prévus sur l'autre face intérieure, pour former des premiers moyens de maintien d'un bord du revêtement souple introduit dans ledit logement à l'aide d'une spatule en contact direct avec ledit revêtement. Il comporte en outre un organe de verrouillage allongé en forme de U prévu pour être introduit, dans un second temps, dans l'entrée dudit logement et former des seconds moyens de maintien du bord de la toile dans ledit profilé de fixation qui s'étendent sur toute la périphérie du cadre de fixation. Après sa mise en place, cet organe de verrouillage n'est plus démontable. Toutes ces solutions de montage sont très techniques et nécessitent généralement l'intervention d'un professionnel et l'utilisation d'outils adaptés. Ces outils, qui sont généralement des outils à lame plate tels que des spatules de forme particulière, sont directement appliqués sur le revêtement pour l'introduire en force dans le profilé de fixation et, selon la nature du revêtement, leur lame peut endommager la face visible du revêtement si le poseur n'est pas suffisamment soigneux. Dans la majorité des systèmes de montage existants, le démontage et le remontage d'un même revêtement n'est généralement pas possible, parce qu'il est soit déchiré par les mâchoires lorsqu'on essaie de le retirer du profilé de fixation, soit trop court puisqu'il est souvent coupé à fleur du profilé de fixation et ses dimensions réduites après montage ne lui permettent plus d'être tendu et reposé.

### Exposé de l'invention :

La présente invention vise à pallier ces inconvénients en proposant un procédé de montage et un cadre de fixation permettant de standardiser la fabrication des revêtements souples et de simplifier considérablement le montage d'un revêtement souple sur un cadre de fixation, qui peut être préalablement fixé sur des parois telles que des murs, un plafond, ou similaires, ou qui peut former un cadre autoportant pour réaliser des caissons d'ambiance, des dalles, ou similaires, et d'envisager la commercialisation dudit cadre de fixation sous la forme d'un kit de montage rendant le montage accessible à toute personne non qualifiée, sans avoir recours à un outillage spécifique, mais à un outillage standard.

Le but de l'invention est également de permettre le montage et le démontage du même revêtement ou d'un revêtement de rechange de manière simple, rapide et sans aucune détérioration dudit revêtement ni au montage, ni au démontage, autorisant ainsi sa réutilisation, et grâce au fait que ledit revêtement conserve des dimensions supérieures à celles du cadre même après démontage, son surplus n'étant pas coupé mais conservé et dissimulé à l'intérieur du cadre de fixation.

Dans ce but, l'invention concerne un procédé de montage du genre indiqué en préambule, caractérisé en ce qu'on utilise comme moyens de pincement une pluralité de clips de verrouillage ayant une section en forme de V ou de U, qui sont des pièces séparées desdits profilés de base et dudit revêtement et qui ont une longueur inférieure à celle des profilés de base, chaque clip de verrouillage étant agencé pour entrer dans ledit logement de réception et y rester en position verrouillée, et en ce que, pour introduire un bord du revêtement dans le logement de réception d'un profilé de base, on réserve un surplus de revêtement au-delà du bord à introduire, on intercale un clip de verrouillage entre l'outil d'insertion et le bord du revêtement à introduire, on pousse le clip de verrouillage et simultanément le bord du revêtement à introduire dans ledit logement de réception jusqu'à atteindre la position verrouillée dudit clip de verrouillage dans laquelle le bord du revêtement est retenu par pincement entre le clip de verrouillage et ledit logement, on retire l'outil d'insertion, on réitère ces opérations le long des bords du revêtement à introduire et sur la périphérie dudit cadre de fixation en utilisant à chaque nouvelle opération un nouveau clip de verrouillage que l'on positionne à distance du précédent, et on rentre à l'aide dudit outil d'insertion ledit surplus de revêtement dans ledit logement de réception directement ou dans la section en forme de V ou de U desdits clips de verrouillage. Pour tendre, ajuster ou retirer ledit revêtement par rapport audit cadre de fixation, on peut dans une première variante de réalisation, déverrouiller un ou plusieurs clips de verrouillage en tirant sur le surplus du revêtement resté à l'extérieur dudit cadre de fixation pour comprimer le clip de fixation et l'extraire dudit logement de réception simultanément au bord correspondant dudit revêtement. On peut également dans une variante plus avantageuse de l'invention déverrouiller un ou plusieurs clips de verrouillage en exerçant une traction sur une patte de démontage saillante prévue sur ledit clip de verrouillage, permettant de comprimer le clip de fixation, de l'extraire dudit logement de réception et d'extraire simultanément le bord correspondant dudit revêtement.

Après montage du revêtement sur ledit cadre de fixation, on pose de préférence une cornière de finition sur chaque profilé de base pour obturer le logement de réception et retenir le surplus du revêtement resté à l'extérieur dudit logement.

Dans ce but également, l'invention concerne un cadre de fixation du genre indiqué en préambule, caractérisé en ce que lesdits moyens de pincement comportent une pluralité de clips de verrouillage ayant une section en forme de V ou de U, qui sont des pièces séparées desdits profilés de base et dudit revêtement et qui ont une longueur inférieure à celle des profilés de base, et en ce que chaque clip de verrouillage est agencé pour entrer dans le logement de réception et y rester en position verrouillée dans laquelle un bord du revêtement peut être retenu par pincement entre le clip de verrouillage et ledit logement. Dans une forme de réalisation préférée, le profilé de base comporte au moins deux ailes longitudinales, rigides, écartées l'une de l'autre et assemblées par un fond pour former une rainure longitudinale ouverte définissant ledit logement de réception pourvu d'une zone d'entrée, au moins une des ailes longitudinales comportant une butée de blocage définissant la position verrouillée desdits clips de verrouillage. La butée de blocage est avantageusement constituée d'un rebord s 'étendant en direction de l'autre aile longitudinale pour rétrécir la zone d'entrée dudit logement de réception. L'aile longitudinale qui comporte ledit rebord peut correspondre à l'aile extérieure audit cadre de fixation en fonction de la destination dudit cadre.

Dans la forme de réalisation préférée, les ailes longitudinales s'étendent dans deux plans sensiblement parallèles délimitant entre elles ledit logement de réception et ladite zone d'entrée qui s'étend également dans un plan sensiblement parallèle auxdites ailes. En fonction des différentes variantes de réalisation, les ailes longitudinales peuvent s'étendre verticalement ou horizontalement, ou dans des plans inclinés selon un axe par rapport à la verticale ou à l'horizontale.

De manière préférentielle, le clip de verrouillage est constitué d'un tronçon de profilé souple pourvu de deux branches assemblées par une zone de pliure ou de courbure, formant un V ou un U, présentant des propriétés d'élasticité, ledit clip de verrouillage étant agencé pour adopter une position ouverte en position déverrouillée dans laquelle l'écartement à l'extrémité de ses branches est supérieur à la largeur de la zone d'entrée et à la largeur dudit logement de réception.

Une des branches du clip de verrouillage comporte une extrémité libre particulièrement agencée pour se bloquer à l'arrière du rebord de l'aile longitudinale extérieure dudit profilé de base, lorsqu'il est en position verrouillée dans ledit logement de réception formant une première zone de pincement, et dans laquelle la branche opposée est agencée pour exercer une pression contre l'aile longitudinale opposée et intérieure dudit profilé de base formant une seconde zone de pincement.

Dans une forme de réalisation préférée, le clip de verrouillage comporte en outre une patte de démontage s'étendant de la branche, bloquée à l'arrière dudit rebord, à l'extérieur du V ou du U, pour être saillante à l'extérieur dudit profilé de base lorsque ledit clip est en position verrouillée. Ainsi, elle permet de comprimer facilement le clip de verrouillage pour l'extraire et ainsi retirer facilement le revêtement dudit profilé de base. Ledit profilé de base peut comporter en outre au moins une patte de fixation qui s'étend du fond de ladite rainure longitudinale dans une direction verticale ou dans une direction horizontale permettant de fixer ledit profilé de base sur une paroi verticale ou sur une paroi horizontale. Dans la forme de réalisation préférée, ledit cadre de fixation comporte en outre une cornière de finition en forme de L agencée pour s'emboîter sur ledit profilé de base de telle sorte qu'une des branches de ladite cornière de finition ferme ledit logement de réception tout en ménageant un espace libre entre ledit logement de réception et ladite branche pour y loger le surplus du revêtement.

Ladite cornière de finition et ledit profilé de base comportent des moyens de retenue réversibles permettant un assemblage démontable de ladite cornière de finition sur ledit profilé de base, ces moyens de retenue pouvant comporter une surface crantée ou dentelée prévue respectivement sur la face extérieure dudit profilé de base et sur la face intérieure de la branche correspondante de ladite cornière de finition.

### Description sommaire des dessins :

La présente invention et ses avantages apparaîtront mieux dans la description suivante de plusieurs modes de réalisation donnés à titre d'exemples non limitatifs, en référence aux dessins annexés, dans lesquels :
les figures 1, 2 et 3 sont des vues en coupe partielle de trois exemples d'implantation d'un revêtement souple sur un cadre de fixation fixé à une paroi selon l'invention, la figure 4 est une vue en perspective d'un quatrième exemple d'implantation d'un revêtement souple sur un cadre de fixation autoportant selon l'invention,
les figures 5, 6, 7 et 8 sont des sections de quatre formes différentes d'un profilé de base entrant dans la fabrication du cadre de fixation selon l'invention et correspondant aux quatre exemples d'implantation illustrés dans les figures 1 à 4, les figures 9A et 9B sont respectivement une section et une vue en perspective d'un clip de verrouillage entrant dans la fabrication du cadre de fixation selon l'invention,
la figure 10 est une section d'une cornière de finition entrant dans la fabrication du cadre de fixation selon l'invention,
la figure 11 est une vue de côté montrant une étape de montage du revêtement souple dans un cadre de fixation selon l'invention pour l'implantation de la figure 3, la figure 12 est une vue en perspective de l'étape de montage de la figure 11, la figure 13 est une vue en perspective du revêtement après montage formant un faux -plafond,
les figures 14A et 14B sont respectivement une section et une vue en perspective d'un clip de verrouillage selon une autre variante de réalisation, et
la figure 15 est une vue similaire à la figure 13 d'un revêtement après montage au moyen du clip de verrouillage des figures 14A et 14B.

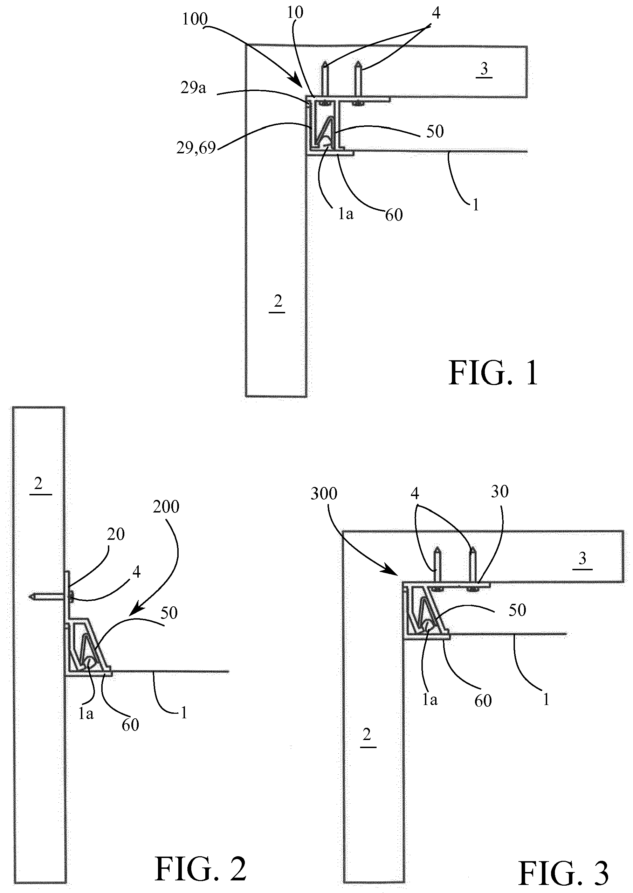

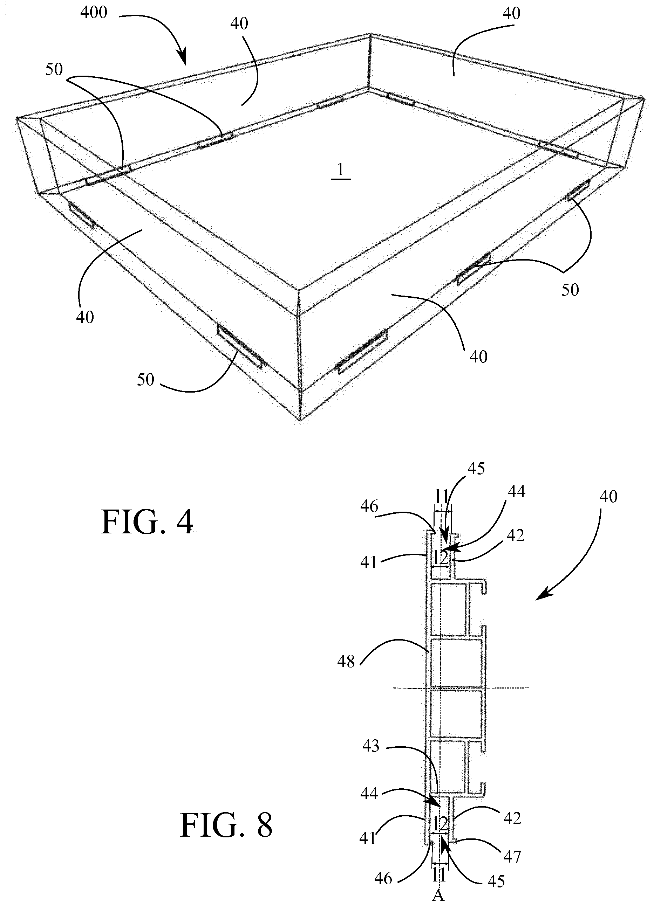

Illustrations de l'invention et différentes manières de la réaliser :
Dans les exemples de réalisation illustrés, les éléments ou parties identiques portent les mêmes numéros de référence. En référence aux figures, l'invention concerne un cadre de fixation 100, 200, 300, 400 permettant le montage d'un revêtement 1 souple tendu à l'intérieur dudit cadre pour créer un faux-plafond, une fausse paroi, une double paroi murale, un caisson d'ambiance, une dalle de fausse paroi, ou similaire, le revêtement 1 ayant des dimensions supérieures à celles du cadre. Les figures 1 à 4 illustrent schématiquement quelques exemples d'implantation sans que ces exemples ne soient limitatifs. Dans les figures 1, 3, le cadre de fixation 100, 300 est agencé pour créer un faux -plafond à proximité d'un plafond 3 existant. A cet effet, il est positionné dans l'angle formé entre les murs 2 et le plafond 3. Il est fixé directement au plafond 3 par des vis de fixation 4, et le revêtement 1 est monté horizontalement dans ledit cadre et parallèlement au plafond 3 à distance du plafond 3 de la hauteur du cadre de fixation 100, 300. Dans la figure 2, le cadre de fixation 200 est agencé pour créer un faux - plafond à distance d'un plafond (non représenté) et rabaisser la hauteur de la pièce. A cet effet, il est positionné et fixé directement aux murs 2 par des vis de fixation 4, et le revêtement 1 est monté horizontalement dans ledit cadre. Dans la figure 4, le cadre de fixation 400 est autoportant et agencé pour créer un caisson d'ambiance par exemple un caisson lumineux, qui peut être suspendu à un plafond, accroché à une paroi, posé sur un support, etc. horizontalement, verticalement ou en biais. Ainsi, ce cadre de fixation 400 autoportant n'est donc pas fixé directement à une paroi. Il peut également servir à créer des dalles de faux -plafond ou de fausse-paroi pour recouvrir tout ou partie d'une surface. Dans un exemple non illustré, le revêtement 1 peut également être tendu verticalement le long d'une paroi murale, ou pour séparer une pièce en deux, par exemple en utilisant l'un ou l'autre des cadres de fixation 100, 200, 300.

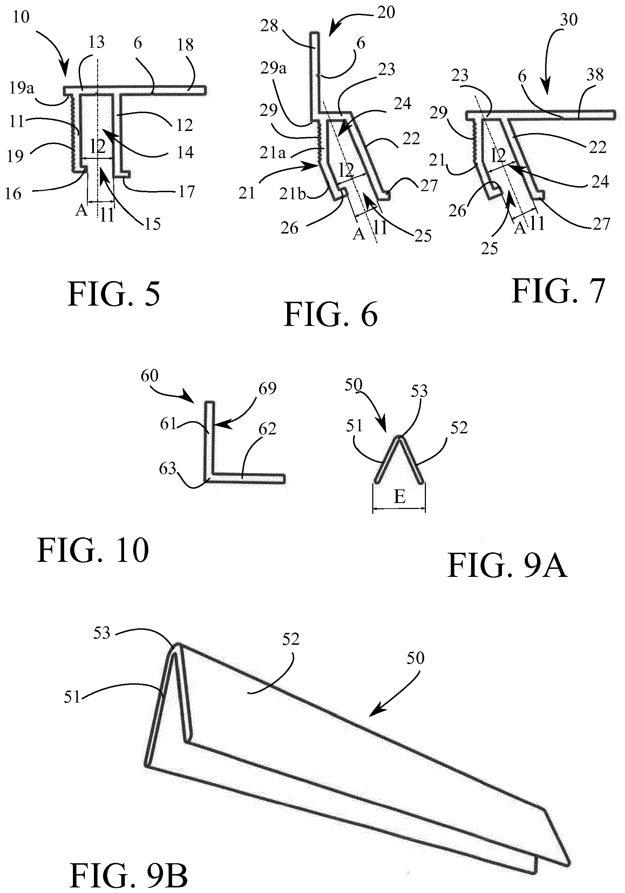

Pour réaliser ces différentes implantations, on utilise différentes formes de profilés de base 10, 20, 30, 40, illustrés aux figures 5 à 8, qui sont assemblés pour former les cadres de fixation 100, 200, 300, 400, soit en les fixant directement sur une paroi bout à bout pour couvrir le périmètre de la paroi à recouvrir, soit en les fixant entre eux pour créer un cadre de fixation 400 autoportant.

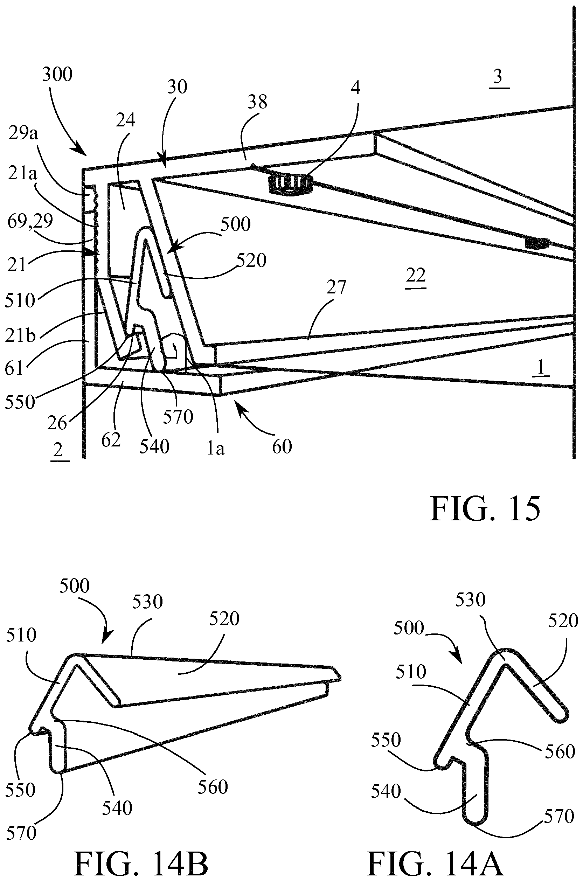

Le revêtement 1 est monté dans les profilés de base 10, 20, 30, 40 des cadres de fixation 100, 200, 300, 400 par l'intermédiaire de clips de verrouillage 50, 500 illustrés plus particulièrement dans les figures 9A et 9B, et les figures 14A et 14B. Chaque clip de verrouillage 50, 500 est agencé pour être emboîté à l'intérieur des profilés de base simultanément avec ledit revêtement 1 et a pour fonction de maintenir ledit revêtement 1 sous tension par pincement, comme expliqué ci-dessous. Une cornière de finition 60 illustrée plus particulièrement à la figure 10 permet de terminer le montage dudit revêtement 1 en recouvrant le profilé de base 10, 20, 30, 40 dudit cadre de fixation 100, 200, 300, 400 et en masquant le surplus du revêtement la non coupé.

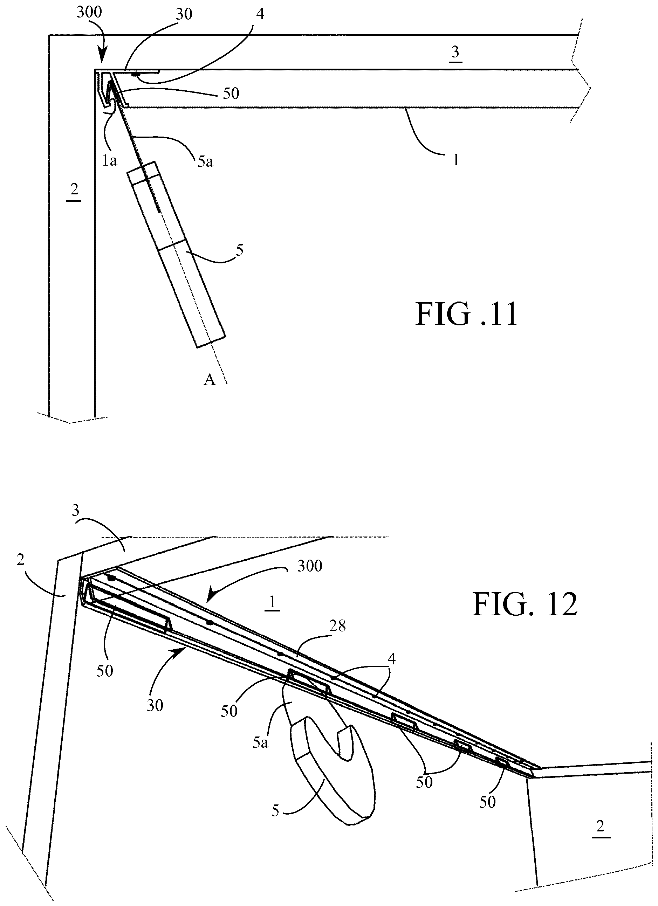

En référence plus particulièrement aux figures 5 à 8, les profilés de base 10, 20, 30, 40 sont des pièces allongées rectilignes, rigides ou semi-rigides. Elles sont obtenues de préférence par extrusion d'une matière métallique, telle qu'à titre d'exemple de l'aluminium ou tout autre alliage métallique léger, non corrosif et offrant une excellente résistance à la flexion, ou encore par extrusion d'une matière plastique telle que du polychlorure de vinyle (PVC) ou de l'acrylonitrile butadiène styrène (ABS), sans que ces exemples ne soient limitatifs. Chaque profilé de base 10, 20, 30, 40 comporte deux ailes longitudinales 11, 12 : 21, 22 ; 41, 42 rigides, écartées l'une de l'autre et assemblées par un fond 13, 23, 43 pour former une rainure longitudinale ouverte définissant un logement de réception 14, 24, 44 pourvu d'une zone d'entrée 15, 25, 45. Dans les exemples représentés, les ailes longitudinales 11, 12 : 21, 22 ; 41, 42 s'étendent dans deux plans sensiblement parallèles, définissant entre-elles un logement de réception 14, 24, 44 sensiblement en forme de U, et délimitent entre elles la zone d'entrée 15, 25, 45 du logement de réception 14, 24, 44 qui s'étend également dans un plan sensiblement parallèle auxdites ailes. Pour les cadres de fixation 100, 400, les ailes longitudinales 11, 12 ; 41, 42 s'étendent verticalement ou horizontalement selon l'orientation dudit profilé de base 10, 40. Et pour les cadres de fixation 200, 300, les ailes longitudinales 21, 22 s'étendent dans des plans inclinés selon l'axe A par rapport à la verticale ou par rapport à l'horizontale selon l'orientation dudit profilé de base 20, 30. L'angle de l'inclinaison de la zone d'entrée 25 peut varier de 10 à 30° sans que ces valeurs ne soient limitatives. L'intérêt de cette inclinaison selon l'axe A consiste à éloigner la zone d'entrée 25 de la paroi 2, 3 sur laquelle est fixé ledit profilé pour faciliter l'introduction du revêtement 1 dans ledit profilé avec une spatule 5 sans être gêné par la paroi 2 (voir figure 11). Bien entendu, la section du logement de réception ainsi que la forme et l'orientation des ailes longitudinales peuvent varier tout en assurant les mêmes fonctions.

Le logement de réception 14, 24, 44 prévu dans les profilés de base 10, 20, 30, 40 comporte dans tous les cas des moyens de blocage du clip de verrouillage 50 en position verrouillée à l'intérieur dudit logement pour qu'il puisse retenir par pincement le revêtement 1 qui est monté sous tension à l'intérieur du cadre de fixation 100, 200, 300, 400. A cet effet, une des ailes longitudinales 11, 21, 41 comporte un rebord 16, 26, 46 saillant, s'étendant en direction de l'autre aile longitudinale 12, 22, 42, donc à l'intérieur dudit logement, ayant pour effet de rétrécir la zone d'entrée 15, 25, 45 du logement de réception 14, 24, 44 et de former une butée de blocage à l'arrière de laquelle le clip de verrouillage 50 est retenu et ne peut ressortir dudit logement de réception. La forme et la disposition de cette butée de blocage peuvent varier en assurant la même fonction. L'autre aile longitudinale 12, 22, 42 comporte également un rebord 17, 27, 47 saillant, s'étendant dans la même direction que le rebord 16, 26, 46, donc à l'intérieur dudit cadre de fixation 100, 200, 300, 400, ayant pour effet de former une surface d'appui lisse, sans arête vive, ni aspérité, autour de laquelle le revêtement 1 prend appui lorsqu'il est monté tendu dans ledit cadre de fixation. La forme et la disposition de la surface d'appui peuvent également varier en assurant la même fonction.

Dans les profilés de base 10, 20, 30, l'aile longitudinale 11, 21 pourvue du rebord 16, 26 correspond à l'aile extérieure dudit cadre de fixation 100, 200, 300. Elle est légèrement plus courte que l'autre aile longitudinale 12, 22 qui est intérieure audit cadre de fixation, ceci pour ne pas interférer avec la cornière de finition 60 et ménager un espace de stockage à l'arrière de la cornière de finition 60 pour le surplus du revêtement la non coupé, comme expliqué plus loin. Dans le profilé de base 40, l'aile longitudinale 41 pourvue du rebord 46 correspond également à l'aile extérieure dudit cadre de fixation 400. Elle est légèrement plus longue que l'autre aile longitudinale 42 qui est intérieure audit cadre de fixation, ceci pour ne pas interférer avec la cornière de finition 60 et ménager également un espace de stockage à l'arrière de la cornière de finition 60 pour le surplus du revêtement la non coupé. Là encore, ces exemples de réalisation ne sont pas limitatifs et adaptés aux contraintes techniques de la mise en œuvre dudit revêtement 1.

Les profilés de base 10, 20, 30 comportent en outre au moins une patte de fixation 18, 28, 38 qui s'étend longitudinalement à partir du fond 13, 23 du logement de réception 14, 24, soit dans une direction verticale permettant de fixer le profilé de base 20 sur une paroi verticale, soit dans une direction horizontale permettant de fixer le profilé de base 10, 30 sur une paroi horizontale. Bien entendu, ces pattes de fixation 18, 28, 38 comportent des perforations 6 réparties de préférence régulièrement sur la longueur desdits profilés pour recevoir les vis de fixation 4 servant à fixer lesdits profilés sur les parois 2, 3 comme illustré dans les figures 1 à 3. Le profilé de base 40 est quelque peu différent étant donné qu'il n'a pas vocation à être fixé directement sur une paroi, mais à constituer un cadre de fixation 400 autoportant 400. Dans l'exemple représenté à la figure 8, il est symétrique par rapport à un plan médian transversal et comporte ainsi deux logements de réception 44 en opposition, de part et d'autre d'une partie centrale 48. La partie centrale 48 est creuse et nervurée pour conférer audit profilé de base 40 une grande résistance mécanique à la flexion. Les deux logements de réception 44 permettent ainsi de monter deux revêtements 1 en opposition, disposés de part et d'autre d'un caisson délimité par lesdits revêtements 1 et par ledit cadre de fixation 400. Ce caisson peut par exemple recevoir des appareils lumineux, audio, vidéo, etc. pour créer des caissons d'ambiance. Bien entendu ces exemples ne sont pas limitatifs et toute variante de réalisation est envisageable.

En référence plus particulièrement aux figures 9A et 9B, le clip de verrouillage 50 est constitué d'un tronçon rectiligne issu d'un profilé souple, obtenu de préférence par extrusion d'une matière synthétique telle qu'à titre d'exemple du polychlorure de vinyle (PVC) ou toute autre matière équivalente. Le profilé souple est coupé en tronçons de profilé courts dont la longueur est bien inférieure à celle des côtés du cadre de fixation, par exemple entre 4 et 8 centimètres sans que ces valeurs ne soient limitatives. En particulier, chaque tronçon de profilé comporte deux branches 51, 52, rectilignes, symétriques ou non, assemblées par une zone de pliure 53 ou de courbure, pour former un V ou un U, conférant au clip de verrouillage 50 ses propriétés de souplesse et d'élasticité. Lorsqu'il est au repos, non sollicité, en position dite déverrouillée, le clip de verrouillage 50 adopte une position naturelle ouverte dans laquelle l'écartement E à l'extrémité de ses branches 51, 52 est supérieur à la largeur 11 de la zone d'entrée 15, 25, 45 ainsi qu'à la largeur 12 du logement de réception 14, 24, 44 qui suit ladite zone d'entrée. Ainsi, lors de l'introduction du clip de verrouillage 50 dans le logement de réception 14, 24, 44 du profilé de base 10, 20, 40, les ailes 51, 52 sont contraintes l'une vers l'autre pour passer la zone d'entrée 15, 25, 45, puis s'écartent légèrement tout en étant maintenues sous contrainte lorsqu'il est à l'intérieur dudit logement de réception 14, 24, 44. Après le passage de la zone d'entrée 15, 25, 45, le clip de verrouillage 50 s'ouvre très légèrement, d'une valeur correspondant à la différence entre la largeur 11 de la zone d'entrée et la largeur 12 dudit logement, générant le blocage d'une de ses branches 51 à l'arrière du rebord 16, 26, 46 constituant une butée de blocage définissant la position verrouillée dudit clip qui ne peut plus ressortir dudit logement. De plus, la tension appliquée par le revêtement 1 sur le clip de verrouillage 50 a pour effet de le décentrer par rapport à l'axe A dudit logement, et de le basculer en direction de l'aile longitudinale 12, 22, 42 à l'opposé de la butée de blocage, renforçant ainsi sa position de verrouillage et favorisant l'appui plan de la branche 52 opposée du clip de verrouillage 50 contre ladite aile longitudinale. Dans cette position verrouillée, le clip de verrouillage 50 reste sous contrainte et ses branches 51, 52 exercent une force de pression contre les ailes longitudinales 11, 12 ; 21, 22 ; 41, 42 qui assurent un maintien et un pincement efficace du revêtement 1 disposé entre elles. En référence plus particulièrement aux figures 14A et 14B, le clip de verrouillage 500 constitue un perfectionnement du clip de verrouillage 50 décrit en référence aux figures 9A et 9B. Il comporte en effet une patte de démontage 540 agencée pour être saillante à l'extérieur du profilé de base 10, 20, 30, 40 lorsque que ledit clip est en position verrouillée, permettant d'y accéder et de le déverrouiller plus facilement pour pouvoir le retirer dudit profilé de base afin de démonter ou repositionner ledit revêtement 1. Il est similaire au clip de l'exemple précédent et comporte un tronçon rectiligne de profilé souple, définissant deux branches 510, 520, symétriques ou non, assemblées par une zone de pliure 530 ou de courbure, pour former un V ou un U. Une de ses branches 510, 520 est prolongée à l'extérieur du V ou du U par la patte de démontage 540. Cette patte de verrouillage 540 est rectiligne et s'étend de préférence sur toute la longueur du tronçon de profilé. Elle pourrait également être discontinue ou ponctuelle en fonction de la longueur dudit clip de verrouillage. Cette patte de démontage 540 est prévue plus particulièrement sur la branche 510 dont l'extrémité libre 550 est prévue pour se bloquer à l'arrière du rebord 16, 26, 46 du profilé de base 10, 20, 30, 40 dans ladite position verrouillée. Elle est disposée entre les branches 510 et 520, reliée à la branche 510 par une zone de liaison 560 à légère distance de son extrémité libre 550. La zone de liaison 560 s'étend sensiblement dans un plan perpendiculaire à celui de la branche 510, et la patte de démontage 540 s'étend dans un plan coupant celui de la branche 510 par un angle aigu. Toute autre configuration équivalente d'une patte de démontage, qui s'étend de manière continue ou discontinue sur la longueur du tronçon de profilé, peut également convenir, l'essentiel est qu'elle soit saillante de quelques millimètres à l'extérieur du profilé de base 10, 20, 30, 40 lorsque le clip de verrouillage 500 est en position verrouillée, pour y avoir accès afin d'y exercer une traction manuelle en direction de l'aile longitudinale 22 intérieure du profilé de base 20 pour dégager l'extrémité libre 550 du clip du rebord 26 dudit profilé et libérer le clip de verrouillage 500.

On parle de « tronçons de profilé » pour décrire le clip de verrouillage 50, 500, un tronçon ayant par nature une longueur inférieure à la longueur prévue pour les profilés de base 10, 20, 30, 40, étant donné que le clip de verrouillage 50, 500 n'a pas vocation à s'étendre en continu dans chaque profilé de base. Ce choix constructif permet ainsi de faciliter encore le procédé de montage du revêtement 1 comme expliqué plus loin. Le cadre de fixation 100, 200, 300, 400 comporte en outre une cornière de finition 60, représentée plus en détail à la figure 10, qui est constituée d'un profilé souple, obtenu de préférence par extrusion d'une matière synthétique telle qu'à titre d'exemple du polychlorure de vinyle (PVC) ou toute autre matière équivalente. En particulier, chaque cornière de finition 60 comporte deux branches 61, 62, assemblées par une zone de pliure 63 à angle droit, pour former un L. Les branches 61, 62 sont de longueur égale ou non, et leur face extérieure peut être revêtue d'une surface de décor puisqu'au moins une des branches de la cornière de finition 60 a pour vocation de rester visible à l'extérieur dudit cadre de fixation 100, 200, 300, 400 après le montage dudit revêtement 1. Cette surface de décor peut être réalisée pour tout moyen connu, tel que peinture, laquage, application d'un film décor adhésif, co-extrusion avec un film décor, etc.

Cette cornière de finition 60 comporte en outre des moyens de retenue complémentaires à ceux prévus en correspondance sur les profilés de base 10, 20, 30, 40, ces moyens de retenue étant réversibles, en ce sens qu'ils permettent un assemblage démontable de ladite cornière de finition sur ledit profilé de base. Dans les exemples illustrés dans les figures 1 à 3, 13 et 15, ces moyens de retenue réversibles comportent une surface crantée ou dentelée 69, 19, 29 prévus respectivement sur la face extérieure dudit profilé de base 10, 20, 30 et sur la face intérieure de la branche verticale 61 de la cornière de finition 60. A cet effet, les profilés de base 10, 20, 30 comportent une zone d'emboîtement 19a, 29a située à l'extérieur dudit cadre de fixation 100, 200, 300 et délimitée par l'aile longitudinale 11, 21 extérieure, un prolongement du fond 13, 23 à l'extérieur dudit profilé, et la paroi 2, 3 sur laquelle est fixé ledit profilé de base 10, 20, 30. Dans les profilés de base 20, 30 dans lesquels les ailes longitudinales 21, 22 sont inclinées suivant l'axe A, l'aile 21 extérieure comporte un tronçon vertical 21a entre le fond 23 et le tronçon incliné 21b, le tronçon vertical 21a délimitant ladite zone d'emboîtement 29a.

### Possibilités d'application industrielle :

Le cadre de fixation 100, 200, 300, 400 selon l'invention tel qu'il vient d'être décrit avec ses différentes pièces : profilés de base 10, 20, 30, 40, clips de verrouillage 50, 500, et cornières de finition 60, a l'avantage de pouvoir être proposé à la vente en kit. Le revêtement 1 quant à lui peut être fabriqué en continu, et vendu au mètre ou en rouleau. Bien entendu tout autre moyen de conditionnement peut être envisagé. On choisira un revêtement 1 dont les dimensions sont supérieures à celles du cadre de fixation. Pour monter le revêtement 1 sur un cadre de fixation 100, 200, 300, 400, le procédé de montage selon l'invention consiste à assembler des profilés de base 10, 20, 30, 40 selon l'implantation souhaitée, soit en les fixant sur une paroi 2, 3, soit en les fixant entre eux pour former un cadre autoportant 400. Ensuite, on utilise les clips de verrouillage 50, 500 avec un outil d'insertion 5 standard du commerce de type spatule, pourvu d'une lame plate 5a. Les termes « bord du revêtement » ou « bord à introduire » utilisés dans la suite de la description doivent s'entendre comme une zone de bordure située parallèlement et à distance de l'extrémité ou de la lisière du revêtement.

Pour introduire un bord du revêtement 1 dans le logement de réception 14, 24, 44 d'un profilé de base 10, 20, 30, 40 et en référence à la figure 11 :
on réserve un surplus de revêtement la au-delà du bord à introduire, on intercale un clip de verrouillage 50, 500 entre l'outil d'insertion 5 et le bord du revêtement 1 à introduire de sorte que l'outil d'insertion n'est pas en contact avec ledit revêtement,
on pousse dans l'axe A le clip de verrouillage 50, 500 et simultanément le bord du revêtement 1 dans le logement de réception 14, 24, 44 jusqu'à atteindre la position verrouillée du clip de verrouillage 50, 500, qui intervient lorsque le clip de verrouillage 50, 500 est logé dans ledit logement de réception, dans laquelle position de verrouillage le bord du revêtement 1 est retenu par pincement entre le clip de verrouillage 50, 500 et ledit logement comme expliqué précédemment,
on retire l'outil d'insertion 5 du clip de verrouillage 50, 500 qui reste en position verrouillée dans ledit logement,
on réitère ces opérations le long des bords du revêtement 1 à introduire et sur la périphérie dudit cadre de fixation 30 en utilisant à chaque nouvelle opération un nouveau clip de verrouillage 50, 500, et en positionnant les clips de verrouillage de préférence à distance les uns des autres, par exemple avec un intervalle de 5 à 15 cm sans que ces valeurs ne soient limitatives, et à la fin du montage, on coupe si nécessaire le surplus de revêtement la pour le raccourcir et on le rentre à l'aide dudit outil d'insertion 5 dans le logement de réception 14, 24, 44, soit directement, soit dans la forme en V ou en U des clips de verrouillage 50, 500, pour disposer ainsi d'une réserve de revêtement 1 facilitant son démontage et son remontage.

Pour tendre, ajuster ou retirer le revêtement 1 du cadre de fixation 300, on déverrouille un ou plusieurs clips de verrouillage 50, 500. Dans le cas du clip de verrouillage 50 selon les figures 9A et 9B, il suffit de tirer sur le surplus du revêtement la resté à l'extérieur du logement de réception 24, s'étendant de l'aile longitudinale 21, pourvue de la butée de blocage. Cette traction manuelle exercée sur le surplus du revêtement la a pour effet de comprimer le clip de fixation 50 en ramenant la branche 51 vers la branche 52, jusqu'à ce que la branche 51 s'échappe du rebord 26, permettant la sortie du clip de verrouillage 50 dudit logement de réception 24, simultanément au bord correspondant dudit revêtement 1. Dans le cas du clip de verrouillage 500 selon les figures 14A et 14B, il suffit d'exercer une traction manuelle sur la patte de démontage 540 pour comprimer le clip de fixation 500 en ramenant la branche 510 vers la branche 520, jusqu'à ce que la branche 510 s'échappe du rebord 26, permettant la sortie du clip de verrouillage 500 dudit logement de réception 24, et simultanément la sortie du bord correspondant dudit revêtement 1. Lorsque le montage de l'ensemble du revêtement 1 sur le cadre de fixation 300 est terminé, il convient de découper à l'aide d'un outil de coupe de type cutter une partie du surplus de revêtement la, uniquement si nécessaire, pour ne laisser qu'un surplus d'environ 3 à 6 centimètres permettant un démontage et remontage faciles, sans que ces valeurs ne soient limitatives. Puis on pousse ce surplus de revêtement la à l'intérieur du logement de réception 14, 24, 44, soit dans le V ou U formé par le clip de verrouillage 50, 500 là où il y un clip de verrouillage, soit à l'intérieur du profilé de base 10, 20, 30, 40 là où il n'y a pas de clip de verrouillage. Ce surplus de revêtement la pourra par la suite être déplié, et sera pratique pour le démontage et le remontage du revêtement 1. Puis, on pose une cornière de finition 60 tout au long dudit cadre de fixation 300 pour cacher les profilés de base 30 et retenir le surplus du revêtement la resté à l'extérieur dudit cadre et rentré dans ledit logement de réception 14, 24, 44. A cet effet, la cornière de finition 60 est plaquée contre le revêtement 1 tendu et le profilé de base 10, 20, 30, 40 correspondant, jusqu'à ce que sa branche 62 arrive en butée soit contre le rebord 17, 27, 46 de l'aile longitudinale 12, 22, 41 la plus longue dudit profilé, soit contre l'extrémité libre 570 de la patte de démontage 540 du clip de verrouillage 500. La pose de cette cornière de finition 60 permet de terminer esthétiquement le montage dudit revêtement 1 et de conserver un surplus de revêtement la, au lieu de le couper à fleur comme dans tous les systèmes de pose actuels, pour pouvoir le cas échéant démonter et remonter facilement le revêtement 1.

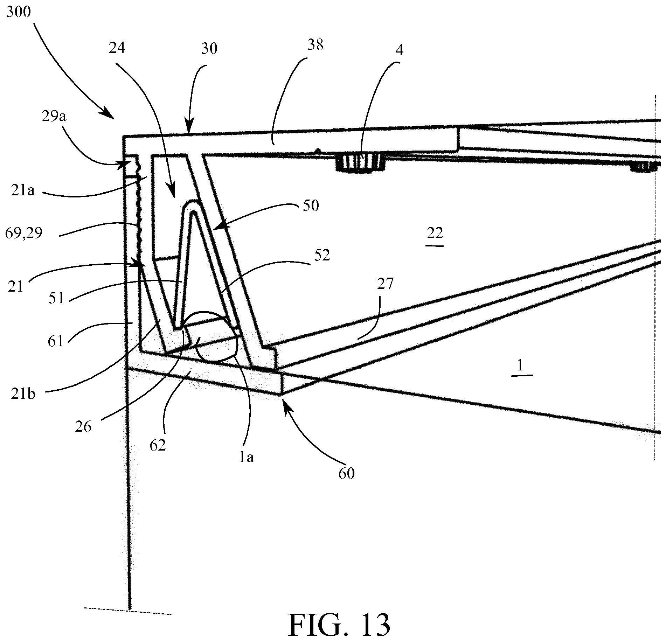

La figure 12 montre par transparence une partie d'un faux-plafond en cours de réalisation sur un cadre de fixation 300, selon la configuration de la figure 3, avec un revêtement 1 tendu à l'aide de clips de verrouillage 50 des figures 9A et 9B, repartis sensiblement régulièrement le long des profilés de base 30, à distance les uns des autres. Et la figure 13 montre une section du cadre de fixation 300 terminé sur lequel la cornière de finition 60 a été posée. La figure 15 est similaire à la figure 13 et montre une section du cadre de fixation 300 d'un faux-plafond, selon la configuration de la figure 3, avec un revêtement 1 tendu à l'aide de clips de verrouillage 500 des figures 14A et 14B. En position verrouillée, il apparaît clairement que la patte de démontage 540 du clip de verrouillage 500 est légèrement saillante à l'extérieur du profilé de base 20, en restant à distance de l'aile longitudinale 22 intérieure pour ne pas obstruer la zone d'entrée 25 du logement de réception 24. Dans cette configuration, la cornière de finition 60 est plaquée contre le clip de verrouillage 500, sa branche 62 venant en butée contre l'extrémité libre 570 de la patte de démontage 540. En fonction de la longueur de la patte de démontage 540, un jeu peut persister entre la cornière de finition 60 et le revêtement 1 qui reste insignifiant et sans incidence sur l'esthétique du faux-plafond ou de la fausse paroi murale. En cas de démontage ou de repositionnement du revêtement 1, le clip de verrouillage 500 peut être extrait du profilé de base 30 très facilement en exerçant une traction manuelle sur la patte de démontage 540 accessible afin de le dégager du rebord 26 formant la butée de blocage.

Il ressort clairement de cette description que l'invention permet d'atteindre les buts fixés, à savoir un système de montage d'un revêtement souple sur un cadre de fixation accessible à tout bricoleur, pouvant être monté, démonté et remonté, aisément, sans détériorer le revêtement 1 étant qu'il est introduit dans ledit cadre par l'intermédiaire de clips le protégeant de l'outil d'insertion, puis maintenu sous tension par pincement par les mêmes clips entre des surfaces lisses, sans relief, ni crantage.

## Revendications

1. Procédé de montage d'un revêtement (1) souple tendu sur un cadre de fixation (100, 200, 300, 400), ledit revêtement ayant des dimensions supérieures à celles dudit cadre, le cadre de fixation comportant au moins un assemblage de profilés de base (10, 20, 30, 40), chaque profilé de base comportant un logement de réception (14, 24, 44) d'un bord dudit revêtement (1) et des moyens de pincement agencés pour retenir ledit bord du revêtement dans ledit logement de réception, procédé dans lequel le bord du revêtement est introduit dans ledit logement de réception au moyen d'un outil d'insertion (5) et y est maintenu sous tension par lesdits moyens de pincement, **caractérisé en ce qu'**on utilise comme moyens de pincement une pluralité de clips de verrouillage (50, 500) ayant une section en forme de V ou de U, qui sont des pièces séparées desdits profilés de base (10, 20, 30, 40) et dudit revêtement (1) et qui ont une longueur inférieure à celle des profilés de base, chaque clip de verrouillage étant agencé pour entrer dans ledit logement de réception (14, 24, 44) et y rester en position verrouillée, et **en ce que**, pour introduire un bord du revêtement (1) dans le logement de réception d'un profilé de base, on réserve un surplus de revêtement (1a) au-delà du bord à introduire, on intercale un clip de verrouillage (50, 500) entre l'outil d'insertion (5) et le bord du revêtement (1) à introduire, on pousse le clip de verrouillage (50, 500) et simultanément le bord du revêtement (1) à introduire dans ledit logement de réception (14, 24, 44) jusqu'à atteindre la position verrouillée dudit clip de verrouillage (50, 500) dans laquelle le bord du revêtement (1) est retenu par pincement entre le clip de verrouillage (50, 500) et ledit logement, on retire l'outil d'insertion (5), on réitère ces opérations le long des bords du revêtement (1) à introduire et sur la périphérie dudit cadre de fixation (100, 200, 300, 400) en utilisant à chaque nouvelle opération un nouveau clip de verrouillage (50, 500) positionné à distance du précédent, et **en ce qu'**on rentre le surplus de revêtement (la) dans ledit logement de réception (14, 24, 44) directement ou dans la section en forme de V ou de U desdits clips de verrouillage (50, 500).

2. Procédé de montage selon la revendication 1, **caractérisé en ce que**, pour tendre, ajuster ou retirer ledit revêtement (1) par rapport audit cadre de fixation (100, 200, 300, 400), on déverrouille un ou plusieurs clips de verrouillage (50) en tirant sur le surplus du revêtement (la) resté à l'extérieur dudit cadre de fixation pour comprimer le clip de fixation (50) et l'extraire dudit logement de réception simultanément au bord correspondant dudit revêtement (1).

3. Procédé de montage selon la revendication 1, **caractérisé en ce que**, pour tendre, ajuster ou retirer ledit revêtement (1) par rapport audit cadre de fixation (100, 200, 300, 400), on déverrouille un ou plusieurs clips de verrouillage (500) en exerçant une traction sur une patte de démontage (540) saillante prévue sur ledit clip de verrouillage (500), permettant de comprimer le clip de fixation (500), de l'extraire dudit logement de réception et d'extraire simultanément le bord correspondant dudit revêtement (1).

4. Procédé de montage selon la revendication 1, **caractérisé en ce que**, après montage du revêtement (1) sur ledit cadre de fixation (100, 200, 300, 400), on pose une cornière de finition (60) sur chaque profilé de base (10, 20, 30, 40) pour obturer le logement de réception (14, 24, 44) et retenir le surplus du revêtement (1a).

5. Cadre de fixation (100, 200, 300, 400), pour la mise en oeuvre du procédé de montage selon l'une quelconque des revendications précédentes, ledit cadre comportant au moins un assemblage de profilés de base (10, 20, 30, 40), chaque profilé de base comportant un logement de réception (14, 24, 44) d'un bord dudit revêtement (1) et des moyens de pincement agencés pour retenir ledit bord du revêtement dans ledit logement de réception, **caractérisé en ce que** lesdits moyens de pincement comportent une pluralité de clips de verrouillage (50, 500) ayant une section en forme de V ou de U, qui sont des pièces séparées desdits profilés de base (10, 20, 30, 40) et dudit revêtement (1) et qui ont une longueur inférieure à celle des profilés de base, et **en ce que** chaque clip de verrouillage (50, 500) est agencé pour entrer dans le logement de réception (14, 24, 44) et y rester en position verrouillée dans laquelle un bord du revêtement (1) peut être retenu par pincement entre le clip de verrouillage (50, 500) et ledit logement.

6. Cadre de fixation selon la revendication 5, **caractérisé en ce que** ledit profilé de base (10, 20, 30, 40) comporte au moins deux ailes longitudinales (11, 12; 21, 22 ; 41, 42), rigides, écartées l'une de l'autre et assemblées par un fond (13, 23, 43) pour former une rainure longitudinale ouverte définissant ledit logement de réception (14, 24, 44) pourvu d'une zone d'entrée (15, 25, 45), et **en ce qu'**au moins une des ailes longitudinales (11, 21, 41) comporte une butée de blocage définissant la position verrouillée desdits clips de verrouillage (50).

7. Cadre de fixation selon la revendication 6, **caractérisé en ce que** ladite butée de blocage est constituée d'un rebord (16, 26, 46) s'étendant en direction de l'autre aile longitudinale (12, 22, 42) pour rétrécir la zone d'entrée (15, 25, 45) dudit logement de réception (14, 24, 44).

8. Cadre de fixation selon la revendication 7, **caractérisé en ce que** l'aile longitudinale (11, 21, 41) qui comporte ledit rebord (16, 26, 46) correspond à l'aile située à l'extérieur audit cadre de fixation (100, 200, 300, 400).

9. Cadre de fixation selon la revendication 6, **caractérisé en ce que** les ailes longitudinales (11, 12; 21, 22; 41, 42) s'étendent dans deux plans sensiblement parallèles délimitant entre elles ledit logement de réception (14, 24, 44) et ladite zone d'entrée (15, 25, 45) qui s'étend également dans un plan sensiblement parallèle auxdites ailes.

10. Cadre de fixation selon la revendication 9, **caractérisé en ce que** les ailes longitudinales (11, 12; 41, 42) s'étendent verticalement ou horizontalement.

11. Cadre de fixation selon la revendication 9, **caractérisé en ce que** les ailes longitudinales (21, 22) s'étendent dans des plans inclinés selon un axe (A) par rapport à la verticale ou à l'horizontale.

12. Cadre de fixation selon l'une quelconque des revendications 6 à 11, **caractérisé en ce que** ledit clip de verrouillage (50, 500) est constitué d'un tronçon de profilé souple pourvu de deux branches (51, 52; 510, 520) assemblées par une zone de pliure (53, 530) ou de courbure, formant un V ou un U, présentant des propriétés d'élasticité, et **en ce que** ledit clip de verrouillage (50, 500) est agencé pour adopter une position ouverte en position déverrouillée dans laquelle l'écartement (E) à l'extrémité de ses branches (51, 52; 510, 520) est supérieur à la largeur (11) de la zone d'entrée (15, 25, 45) et à la largeur (12) dudit logement de réception (14, 24, 44).

13. Cadre de fixation selon la revendication 12, **caractérisé en ce qu'**une des branches (51, 510) dudit clip de verrouillage (50, 500) comporte une extrémité libre agencée pour se bloquer à l'arrière du rebord (16, 26, 46) de l'aile longitudinale (11, 21, 41) extérieure dudit profilé de base, lorsque le clip de verrouillage (50, 500) est en position verrouillée dans ledit logement de réception (14, 24, 44) formant une première zone de pincement, et dans laquelle la branche (52, 520) opposée est agencée pour exercer une pression contre l'aile longitudinale (12, 22, 42) intérieure dudit profilé de base formant une seconde zone de pincement.

14. Cadre de fixation selon la revendication 13, **caractérisé en ce que** ledit clip de verrouillage (500) comporte en outre une patte de démontage (540) s'étendant de ladite branche (510) à l'extérieur du V ou du U, pour être saillante à l'extérieur du profilé de base (10, 20, 30, 40) lorsque ledit clip est en position verrouillée.

15. Cadre de fixation selon la revendication 6, **caractérisé en ce que** ledit profilé de base (10, 20, 30, 40) comporte en outre au moins une patte de fixation (18, 28, 48) qui s'étend du fond (13, 23, 43) de ladite rainure longitudinale dans une direction verticale ou dans une direction horizontale permettant de fixer ledit profilé de base (10, 20, 30, 40) sur une paroi verticale (2) ou sur une paroi horizontale (3).

16. Cadre de fixation selon l'une quelconque des revendications 5 à 15, **caractérisé en ce qu'**il comporte en outre une cornière de finition (60) en forme de L agencée pour s'emboîter sur ledit profilé de base (10, 20, 30, 40) de telle sorte que une des branches (62) de ladite cornière de finition (60) ferme ledit logement de réception (14, 24, 44) tout en ménageant un espace libre entre ledit logement de réception (14, 24, 44) et ladite branche (62) pour y loger le surplus du revêtement (1a).

17. Cadre de fixation selon la revendication 16, **caractérisé en ce que** ladite cornière de finition (60) et ledit profilé de base (10, 20, 30, 40) comportent des moyens de retenue (19, 29, 69) réversibles en ce sens qu'ils permettent un assemblage démontable de ladite cornière de finition (60) sur ledit profilé de base.

18. Cadre de fixation selon la revendication 17, **caractérisé en ce que** lesdits moyens de retenue comportent une surface crantée ou dentelée (19, 29, 69) prévue respectivement sur la face extérieure dudit profilé de base (10, 20, 30, 40) et sur la face intérieure de la branche (61) correspondante de ladite cornière de finition (60).

## Patentansprüche

1. Verfahren für die Montage einer flexiblen Verkleidung (1), die auf einen Befestigungsrahmen (100, 200, 300, 400) gespannt ist, wobei die Verkleidung größere Abmessungen hat als der besagte Rahmen, der Befestigungsrahmen mindestens eine Verbindung von Grundprofilen (10, 20, 30, 40) aufweist, jedes Grundprofil einen Sitz für die Aufnahme (14, 24, 44) eines Randes der besagten Verkleidung (1) und Klemmmittel aufweist, die für das Zurückhalten des besagten Randes der Verkleidung im besagten Aufnahmesitz ausgestaltet sind, Verfahren, bei dem der Rand der Verkleidung mittels eines Einführungswerkzeugs (5) in den besagten Aufnahmesitz eingeführt und dort mit den besagten Klemmmitteln unter Spannung gehalten wird, **dadurch gekennzeichnet, dass** als Klemmmittel eine Vielzahl von Verriegelungsklammern (50, 500) mit einem Querschnitt in V- oder U-Form verwendet werden, bei denen es sich um Teile handelt, die von den besagten Grundprofilen (10, 20, 30, 40) und der besagten Verkleidung (1) getrennt sind und die eine kürzere Länge haben als die Grundprofile, wobei jede Verriegelungsklammer so ausgestaltet ist, dass sie in den besagten Aufnahmesitz (14, 24, 44) eindringt und dort in verriegelter Position bleibt und **dadurch gekennzeichnet, dass** für das Einführen eines Randes der Verkleidung (1) in den Aufnahmesitz eines Grundprofils ein Überstand der Verkleidung (1a) über den einzuführenden Rand hinaus vorgesehen wird, dass eine Verriegelungsklammer (50, 500) zwischen dem Einführungswerkzeug (5) und dem Rand der einzuführenden Verleidung (1) eingefügt wird, dass die Verriegelungsklammer (50, 500) und der Rand der einzuführenden Verkleidung (1) gleichzeitig in den besagten Aufnahmesitz (14, 24, 44) geschoben werden, bis die verriegelte Position der besagten Verriegelungsklammer (50, 500) erreicht wird, in welcher der Rand der Verkleidung (1) zwischen der Verriegelungsklammer (50, 500) und dem besagten Aufnahmesitz festgeklemmt wird, dass das Einführungswerkzeug (5) entfernt wird, dass diese Vorgänge entlang den Rändern der einzuführenden Verkleidung (1) und rund um den besagten Befestigungsrahmen (100, 200, 300, 400) wiederholt werden, wobei für jeden neuen Vorgang eine neue Verriegelungsklammer (50, 500) verwendet wird, die in einem Abstand zur vorherigen Klammer positioniert wird und **dadurch gekennzeichnet, dass** der Verkleidungsüberstand (1a) direkt in den besagten Aufnahmesitz (14, 24, 44) oder in den Querschnitt in V- oder U-Form der besagten Verriegelungsklammern (50, 500) eingeführt wird.

2. Montageverfahren nach Anspruch 1, **dadurch gekennzeichnet, dass** zum Spannen, Anpassen oder Entfernen der besagten Verkleidung (1) in Bezug auf den besagten Befestigungsrahmen (100, 200, 300, 400) eine oder mehrere Verriegelungsklammern (50) entriegelt werden, indem an dem außerhalb des Befestigungsrahmens verbleibenden Verkleidungsüberstands (1a) gezogen wird, um die Verriegelungsklammer (50) zusammenzudrücken und sie gleichzeitig mit dem entsprechenden Rand der besagten Verkleidung aus besagtem Aufnahmesitz herauszuziehen. (1).

3. Montageverfahren nach Anspruch 1, **dadurch gekennzeichnet, dass** zum Spannen, Anpassen oder Entfernen der besagten Verkleidung (1) in Bezug auf den besagten Befestigungsrahmen (100, 200, 300, 400) eine oder mehrere Verriegelungsklammern (500) entriegelt werden, indem eine hervorstehende Demontagelasche (540), die an der besagten Verriegelungsklammer (500) vorgesehen ist, gezogen wird, wodurch die Verriegelungsklammer (500) zusammengedrückt und aus dem besagten Aufnahmesitz und gleichzeitig der entsprechende Rand der besagten Verkleidung (1) herausgezogen wird.

4. Montageverfahren nach Anspruch 1, **dadurch gekennzeichnet, dass** nach der Montage der Verkleidung (1) auf dem besagten Befestigungsrahmen (100, 200, 300, 400) an jedem Grundprofil (10, 20, 30, 40) ein Abschlusswinkel (60) angebracht wird, um den Aufnahmesitz (14, 24, 44) zu schließen und dem Verkleidungsüberstand (1a) zurückzuhalten.

5. Befestigungsrahmen (100, 200, 300, 400) für die Durchführung des Montageverfahrens nach einem der vorhergehenden Ansprüche, wobei der besagte Rahmen mindestens eine Verbindung von Grundprofilen (10, 20, 30, 40) aufweist, jedes Grundprofil einen Sitz für die Aufnahme (14, 24, 44) eines Randes der besagten Verkleidung (1) und für das Zurückhalten des besagten Randes der Verkleidung im besagten Aufnahmesitz ausgestaltete Klemmmittel aufweist, **dadurch gekennzeichnet, dass** die besagten Klemmmittel eine Vielzahl von Verriegelungsklammern (50, 500) mit einem Querschnitt in V- oder U-Form aufweisen, bei denen es sich um Teile handelt, die von den besagten Grundprofilen (10, 20, 30, 40) und der besagten Verkleidung (1) getrennt sind und die eine kürzere Länge haben als die Grundprofile, und **dadurch gekennzeichnet, dass** jede Verriegelungsklammer (50, 500) so ausgestaltet ist, dass sie in den besagten Aufnahmesitz (14, 24, 44) eindringt und dort in verriegelter Position bleibt, in der ein Rand der Verkleidung (1) zwischen der Verriegelungsklammer (50, 500) und dem besagten Aufnahmesitz festgeklemmt werden kann.

6. Befestigungsrahmen nach Anspruch 5, **dadurch gekennzeichnet, dass** das besagte Grundprofil (10, 20, 30, 40) mindestens zwei Längsflansche (11,12; 21,22; 41,42) aufweist, die starr sind, in einem Abstand zueinander angeordnet und durch eine Basis (13, 23, 43) verbunden sind, um eine offene Längsnut zu bilden, die den besagten Aufnahmesitz (14, 24, 44) definiert, der über eine Einschubzone (15, 25, 45) verfügt und **dadurch gekennzeichnet**, und dass mindestens einer der Längsflansche (11,21,41) einen Sperranschlag aufweist, der die verriegelte Position der besagten Verriegelungsklammern (50) definiert.

7. Befestigungsrahmen nach Anspruch 6, **dadurch gekennzeichnet, dass** der besagte Sperranschlag aus einer Kante (16, 26, 46) besteht, die in Richtung des anderen Längsflansches (12, 22, 42) verläuft und somit die Einschubzone (15, 25, 45) des besagten Aufnahmesitzes (14, 24, 44) verengt.

8. Befestigungsrahmen nach Anspruch 7, **dadurch gekennzeichnet, dass** der Längsflansch (11, 21,41), der die besagte Kante (16, 26, 46) aufweist, dem an der Außenseite des besagten Befestigungsrahmens (100, 200, 300, 400) befindlichen Flansch entspricht.

9. Befestigungsrahmen nach Anspruch 6, **dadurch gekennzeichnet, dass** die Längsflansche (11, 12; 21, 22; 41, 42) in zwei im Wesentlichen parallelen Ebenen verlaufen, die zwischen sich den Aufnahmesitz (14, 24, 44) und die besagte Einschubzone (15, 25, 45) abgrenzen, die ebenfalls in einer zu den Flanschen im Wesentlichen parallelen Ebene verläuft.

10. Befestigungsrahmen nach Anspruch 9, **dadurch gekennzeichnet, dass** sich die Längsflansche (11, 12; 41, 42) senkrecht oder waagrecht erstrecken.

11. Befestigungsrahmen nach Anspruch 9, **dadurch gekennzeichnet, dass** die Längsflansche (21, 22) in Ebenen verlaufen, die entlang einer Achse (A) in Bezug auf die Vertikale oder die Horizontale geneigt sind.

12. Befestigungsrahmen nach einem der Ansprüche 6 bis 11, **dadurch gekennzeichnet, dass** die besagte Verriegelungsklammer (50, 500) durch einen Abschnitt eines flexiblen Profils mit zwei Schenkeln (51, 52; 510, 520) gebildet wird, die durch eine Faltzone (53, 530) oder Krümmungszone in U- oder V-Form miteinander verbunden sind und elastische Eigenschaften besitzen, und **dadurch gekennzeichnet, dass** die Verriegelungsklammer (50, 500) so ausgestaltet ist, dass sie in der entriegelten Position eine offene Position einnimmt, in welcher der Abstand (E) am Ende ihrer Schenkel (51, 52; 510, 520) größer ist als die Breite (11) der Einschubzone (15, 25, 45) und die Breite (12) des besagten Aufnahmesitzes (14, 24, 44).

13. Befestigungsrahmen nach Anspruch 12, **dadurch gekennzeichnet, dass** einer der Schenkel (51, 510) der Verriegelungsklammer (50, 500) ein freies Ende aufweist, das so ausgestaltet ist, dass er hinter der Kante (16, 26, 46) des äußeren Längsflansches (11, 21, 41) des Grundprofils einrastet, wenn die Verriegelungsklammer (50, 500) in verriegelter Position im besagten Aufnahmesitz (14, 24, 44) ist und eine erste Klemmzone bildet, und in welcher der gegenüberliegende Schenkel (52, 520) so ausgestaltet ist, dass er einen Druck gegen den inneren Längsflansch (12, 22, 42) des besagten Grundprofils ausübt und eine zweite Klemmzone bildet.

14. Befestigungsrahmen nach Anspruch 13, **dadurch gekennzeichnet, dass** die Verriegelungsklammer (500) ferner eine Demontagelasche (540) aufweist, die vom besagten Schenkel (510) zur Außenseite des V- oder U-Profils verläuft, um aus dem Grundprofil (10, 20, 30, 40) herauszuragen, wenn die Klammer in verriegelter Position ist.

15. Befestigungsrahmen nach Anspruch 6, **dadurch gekennzeichnet, dass** das Grundprofil (10, 20, 30, 40) ferner mindestens eine Befestigungslasche (18, 28, 48) aufweist, die von der Basis (13, 23, 43) der besagten Längsnut in senkrechter Richtung oder waagrechter Richtung verläuft und die Befestigung des besagten Grundprofils (10, 20, 30, 40) an einer senkrechten Fläche (2) oder an einer waagrechten Fläche (3) ermöglicht.

16. Befestigungsrahmen nach einem der Ansprüche 5 bis 15, **dadurch gekennzeichnet, dass** er ferner einen L-förmigen Abschlusswinkel (60) aufweist, der so ausgestaltet ist, dass er so auf das Grundprofil (10, 20, 30, 40) gesteckt wird, dass einer der Schenkel (62) des besagten Abschlusswinkels (60) den besagten Aufnahmesitz (14, 24, 44) verschließt, wobei zwischen dem Aufnahmesitz (14, 24, 44) und dem besagten Schenkel (62) ein freier Raum verbleibt, um dort den Überstand der Verkleidung (1a) unterzubringen.

17. Befestigungsrahmen nach Anspruch 16, **dadurch gekennzeichnet, dass** der besagte Abschlusswinkel (60) und das besagte Grundprofil (10, 20, 30, 40) umkehrbare Haltemittel (19, 29, 69) in dem Sinne umfassen, dass sie eine demontierbare Montage des besagten Abschlusswinkels (60) auf dem besagten Grundprofil ermöglichen.

18. Befestigungsrahmen nach Anspruch 17, **dadurch gekennzeichnet, dass** die besagten Haltemittel eine gekerbte oder gezahnte Fläche (19, 29, 69) aufweisen, die jeweils an der Außenseite des besagtem Grundprofils (10, 20, 30, 40) und an der Innenseite des entsprechenden Schenkels (61) des besagten Abschlusswinkels (60) vorgesehen ist.

## Claims

1. A method for mounting a flexible lining sheet (1) stretched over a fastening frame (100, 200, 300, 400), said lining sheet having dimensions greater than those of said frame, the fastening frame comprising at least one assembly of base profiles (10, 20, 30, 40), each base profile having a receiving cavity (14, 24, 44) for an edge of said lining sheet (1) and clamping means arranged to retain said edge of the lining sheet in said receiving cavity, wherein the edge of the lining sheet is introduced into said receiving cavity by means of an insertion tool (5) and is kept under tension by said clamping means, **characterized in that** use is made as clamping means of a plurality of locking clips (50, 500) having a V-shaped or U-shaped section, which are separate pieces of said base profiles (10, 20, 30, 40) and of said lining sheet (1) and which have a shorter length than the base profiles, each locking clip being arranged to enter and remain in the locked position in said receiving cavity (14, 24, 44), **and in that,** to introduce an edge of the lining sheet (1) into the receiving cavity of a base profile, an excess of lining sheet (la) beyond the edge to be introduced is reserved, a locking clip (50, 500) is interposed between the insertion tool (5) and the edge of the lining sheet (1) to be introduced, the locking clip (50, 500) and the edge of the lining sheet (1) to be introduced into said receiving housing (14, 24, 44) are simultaneously pushed until the locked position of said locking clip (50, 500) is reached wherein the edge of the lining sheet (1) is clamped between the locking clip (50, 500) and said cavity, the insertion tool (5) is removed, these operations are repeated along the edges of the lining sheet (1) to be introduced and on the periphery of said fastening frame (100, 200, 300, 400) using each new operation a new locking clip (50, 500) positioned at a distance from the previous one, and **in that** the excess of lining sheet (la) is entered directly into said receiving cavity (14, 24, 44) or in the section V-shaped or U-shaped of said locking clips (50, 500).

2. Mounting method according to claim 1, **characterized in that**, to stretch, adjust or remove said lining sheet (1) with respect to said fastening frame (100, 200, 300, 400), one or more locking clips (50) are unlocked by pulling on the excess of lining sheet (la) remained outside said fastening frame to compress the fastening clip (50) and extract it from said receiving cavity simultaneously to the corresponding edge of said lining sheet (1).

3. Mounting method according to claim 1, **characterized in that**, to stretch, adjust or remove said lining sheet (1) relative to said fastening frame (100, 200, 300, 400), one or more locking clips (500) are unlocked by pulling on a dismounting tab (540) provided on said locking clip (500), for compressing the fastening clip (500), extracting it from said receiving cavity and simultaneously extracting the corresponding edge of said lining sheet (1).

4. Mounting method according to claim 1, **characterized in that**, after mounting the lining sheet (1) on said fastening frame (100, 200, 300, 400), a finishing angle (60) is placed on each base profile (10, 20, 30, 40) for closing the receiving cavity (14, 24, 44) and retaining the excess of lining sheet (la).

5. Fastening frame (100, 200, 300, 400), for implementing the mounting method according to any one of the preceding claims, said frame comprising at least one assembly of base profiles (10, 20, 30, 40), each base profile having a receiving cavity (14, 24, 44) for an edge of said lining sheet (1) and clamping means arranged to retain said edge of the lining sheet in said receiving cavity, **characterized in that** said clamping means comprises a plurality of locking clips (50, 500) having a V-shaped or U-shaped section, which are separate pieces of said base profiles (10, 20, 30, 40) and of said lining sheet (1) and which have a shorter length than that of the base profiles, and **in that** each locking clip (50, 500) is arranged to enter the receiving cavity (14, 24, 44) and remain there in the locked position wherein an edge of the lining sheet (1) can be retained by clamping between the locking clip (50, 500) and said cavity.

6. Fastening frame according to claim 5, **characterized in that** said base profile (10, 20, 30, 40) comprises at least two longitudinal wings (11, 12; 21, 22; 41, 42), rigid, spaced apart from one to the other and joined by a bottom (13, 23, 43) to form an open longitudinal groove defining said receiving cavity (14, 24, 44) having an inlet area (15, 25, 45), and **in that** at least one of the longitudinal wings (11, 21, 41) comprises a block stop defining the locked position of said locking clips (50).

7. Fastening frame according to claim 6, **characterized in that** said block stop consists of a flange (16, 26, 46) extending towards the other longitudinal wing (12, 22, 42) to narrow the inlet area (15, 25, 45) of said receiving cavity (14, 24, 44).

8. Fastening frame according to claim 7, **characterized in that** the longitudinal flange (11, 21, 41) which comprises said flange (16, 26, 46) corresponds to the flange situated outside said fastening frame (100, 200, 300, 400).

9. Fastening frame according to claim 6, **characterized in that** the longitudinal flanges (11, 12; 21, 22; 41, 42) extend in two substantially parallel planes delimiting between them said receiving cavity (14, 24, 44) and said inlet area (15, 25, 45) which also extends in a plane substantially parallel to said wings.

10. Fastening frame according to claim 9, **characterized in that** the longitudinal flanges (11, 12; 41, 42) extend vertically or horizontally.

11. Fastening frame according to claim 9, **characterized in that** the longitudinal wings (21, 22) extend in planes inclined along an axis (A) relative to the vertical or the horizontal.

12. Fastening frame according to any one of claims 6 to 11, **characterized in that** said locking clip (50, 500) consists of a section of flexible profile provided with two branches (51, 52; 510, 520) assembled by a folding area (53, 530) or curvature, forming a V or U, having elastic properties, and **in that** said locking clip (50, 500) is arranged to adopt an open position in position unlocked in which the spacing (E) at the end of its branches (51,52; 510,520) is greater than the width (11) of the inlet area (15,25,45) and the width (12) of said receiving housing (14, 24, 44).

13. Fastening frame according to claim 12, **characterized in that** one of the branches (51, 510) of said locking clip (50, 500) has a free end arranged to lock behind the flange (16, 26, 46) of the outer longitudinal wing (11, 21, 41) of said base profile, when the locking clip (50, 500) is in the locked position in said receiving cavity (14, 24, 44) forming a first clamping zone , and wherein the opposite leg (52, 520) is arranged to exert pressure against the inner longitudinal leg (12, 22, 42) of said base section forming a second pinch zone.

14. Fastening frame according to claim 13, **characterized in that** said locking clip (500) further comprises a dismounting tab (540) extending from said branch (510) outside the V or the U, to be protruding outside the base profile (10, 20, 30, 40) when said clip is in the locked position.

15. Fastening frame according to claim 6, **characterized in that** said base profile (10, 20, 30, 40) further comprises at least one fixing lug (18, 28, 48) which extends from the bottom (13, 23, 43) of said longitudinal groove in a vertical direction or in a horizontal direction for fixing said base profile (10, 20, 30, 40) on a vertical wall (2) or on a horizontal wall (3).

16. Fastening frame according to any one of claims 5 to 15, **characterized in that** it further comprises an L-shaped finishing angle (60) arranged to fit on said base profile (10, 20, 30, 40) such that one of the branches (62) of said finishing bracket (60) closes said receiving cavity (14, 24, 44) while providing a free space between said receiving cavity (14, 24, 44) and said branch (62) to accommodate the excess of lining sheet (la).

17. Fastening frame according to claim 16, **characterized in that** said finishing angle (60) and said base profile (10, 20, 30, 40) comprise reversible retaining means (19, 29, 69) allowing a removable assembly of said finishing angle (60) on said base profile.

18. Fastening frame according to claim 17, **characterized in that** said retaining means comprise a notched or serrated surface (19, 29, 69) respectively provided on the outer face of said base profile (10, 20, 30, 40) and on the inner face of the corresponding branch (61) of said finishing angle (60).
